# EUROPÄISCHE PATENTANMELDUNG

(11) **EP 1 081 478 A1**
(43) Veröffentlichungstag der Anmeldung: **07.03.2001**
(21) Anmeldenummer: 00117503.3
(22) Anmeldetag: 12.08.2000
(51) Int. Cl.: G01K 11/32

(54) **Verfahren zur faseroptischen Temperaturmessung und faseroptischer Temperatursensor**

(30) Priorität: 02.09.1999 DE 19941832
(71) Anmelder: MASCHINENFABRIK REINHAUSEN GmbH, 93059 Regensburg (DE)
(72) Erfinder: Helmig, Christian, Dipl.-Ing., 59457 Werl (DE); Teunissen, Jörg, Dipl.-Ing., 40885 Ratingen (DE)

(57) **Zusammenfassung**

Die Erfindung betrifft ein Verfahren zur faseroptischen Temperaturmessung sowie einen geeigneten faseroptischen Temperatursensor. Dabei ist eine polarimetrisch wirkende Glasfaser in einem definierten Längenbereich durch eine Glaskapillare geführt, und der verbleibende Hohlraum dazwischen ist mit einem aushärtenden Klebstoff gefüllt. Eine temperaturabhängige Polarisationsänderung relativ zum von außen eingegebenen definierten Polarisationszustand wird als Maß für eine Temperaturänderung erfaßt.

## Beschreibung

Die Erfindung bezieht sich auf ein Verfahren zur faseroptischen Temperaturmessung und einen entsprechenden geeigneten faseroptischen Temperatursensor zur Online-Überwachung von energietechnischen Anlagen und Geräten.

Die Online-Überwachung von energietechnischen Anlagen und Geräten gewinnt in der elektrischen Energietechnik aufgrund der Sicherheit und der angestrebten wirtschaftlichen Betriebsführung, z. B. hinsichtlich der Lebensdauer, immer mehr an Bedeutung. Eine besonders wichtige Rolle innerhalb der zu erfassenden und zu überwachenden Meßgrößen spielt hier die Temperatur an kritischen oder gefahrgeneigten Teilen oder Bereichen der jeweiligen Anlage oder des jeweiligen Gerätes. Für diese Anwendungsfälle, bei denen eine potentialfreie Temperaturmessung erforderlich ist, etabliert sich zunehmend die faseroptische Meßtechnik.

Bekannt sind dabei Fasergitter-Sensorsysteme zur Temperaturmessung. Dabei werden zur Sensibilisierung von Standard-Quarzglasfasern für die Temperaturmessung mikrostrukturierte Brechzahlgitter in den Kern des Lichtwellenleiters an definierten Stellen entlang der Glasfaser 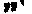 eingeschrieben". Diese monolithisch in die Faser eingebrachten Gitter, sogenannte Bragg-Gitter, sind in der Lage, bestimmte Wellenlängen des Lichtes zu reflektieren. Die Reflexionswellenlänge ist dabei u. a. von der Fasertemperatur abhängig. Bei diesen Fasergitter-Sensorsystemen ist jedoch nachteilig, daß das beschriebene 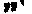 Einschreiben" der Gitter durch eine aufwendige Scanning-Methode oder, ebenso aufwendig, mit kurzen Laserimpulsen während des Glasfaser-Ziehprozesses erfolgen muß.

Weiterhin bereits bekannt sind faseroptische Punktsensorsysteme, die nach verschiedenen Prinzipien arbeiten: Lumineszens-Temperatursensoren basieren auf der als Photolumineszens bekannten Eigenschaft
verschiedener Materialien, bei optischer Anregung in einem bestimmten Spektralbereich eine gegenüber dem Anregungslicht längerwellige charakteristische Strahlung zu emittieren. Als Meßgröße kann dabei entweder die temperaturabhängige Änderung der spektralen Intensitätsverteilung oder die Abklingzeit des Lumineszenslichtes genutzt werden.

Thermochrome Temperatursensoren nutzen den Effekt, daß Amplitude und spektrale Lage der Lichtabsorption fester und flüssiger Stoffe termperaturabhängig sind. Die Stärke der entsprechenden Absorption bzw. Transmission ist somit ein Maß für die gemessene Temperatur.

Interferometrische Sensoren nutzen den Einfluß der Temperatur auf die Phase; sie sind sehr temperaturempfindlich, jedoch ist der Sensorbereich üblicherweise nicht genau lokalisierbar.

Polarimetrische Sensoren nutzen den temperaturabhängigen Einfluß der Doppelbrechung auf die Phase der Lichtwelle. Die Temperaturabhängigkeit ist besonders groß bei einer stark doppelbrechenden Faser, weswegen hierzu in der Regel kommerziell erhältliche HiBi-Fasern (High-Birefringent) verwendet werden. Ein solcher polarimetrischer Sensor ist beispielsweise aus der DE 196 44 885 A1 bekannt. Nachteilig ist auch bei diesen Sensoren, daß bereits die Zuleitung zum eigentlichen Sensorbereich temperaturempfindlich ist und damit keine 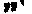 punktgenaue" Temperaturerfassung etwa an verschiedenen Stellen eines elektrischen Betriebsmittels möglich ist.

Aufgabe der Erfindung ist es, ein polarimetrisches faseroptisches Temperaturmeßverfahren und weiterhin einen polarimetrischen faseroptischen Temperatursensor anzugeben, der einfach aufgebaut ist, eine genaue, auch und gerade räumlich definierte, Temperaturmessung gestattet und wobei lediglich auf Standardkomponenten zurückgegriffen werden muß.

Diese Aufgabe wird erfindungsgemäß gelöst durch ein Verfahren zur faseroptischen Temperaturmessung gemäß Patentanspruch 1 sowie einen faseroptischen Temperatursensor gemäß Patentanspruch 2.

Die Unteransprüche betreffen besonders vorteilhafte Weiterbildungen des Temperatursensors.

Der allgemeine erfinderische Gedanke besteht darin, den temperaturabhängigen Doppelbrechungseinfluß von in einem genau definierten engen Bereich mit einer Glasfaser in Verbindung stehendem Klebstoff auf diese Glasfaser gezielt als Meßgröße für eine potentialfreie Detektion der Temperatur in energietechnischen Anlagen, Geräten und Betriebsmitteln, beispielsweise Leistungstransformatoren und/oder Stufenschaltern an solchen Leistungstransformatoren, zu nutzen.

Besonders vorteilhaft dabei ist zunächst die Möglichkeit der genauen Definition des entsprechenden Ortes im Inneren des jeweiligen Betriebsmittels, in dem die Temperatur erfaßt werden soll. Nur der Bereich der Glasfaser, der an dieser Stelle, an der die Temperatur gemessen werden soll, vorbeigeführt ist, wird durch die Umhüllung mit einer Glaskapillare und Ausfüllung mit einem Klebstoff praktisch 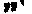 zum Sensor gemacht", nur in diesem engen Bereich, etwa auf einer Länge der Glasfaser von einem Zentimeter, führen Temperaturänderungen zu signifikanten Veränderungen der Polarisation in der Glasfaser.

Die Erfindungen sollen nachfolgend anhand von Zeichnungen beispielhaft noch näher erläutert werden:

Es zeigen:
- Fig. 1: einen schematischen Ablauf eines erfindungsgemäßen Verfahrens
- Fig. 2: einen erfindungsgemäßen Temperatursensor, wobei die eigentlichen erfindungsgemäßen Elemente über der Gesamtdarstellung noch einmal vergrößert gezeigt sind
- Fig. 3: die jeweilige Größe der linearen Doppelbrechung, abhängig von der jeweiligen Temperatur.

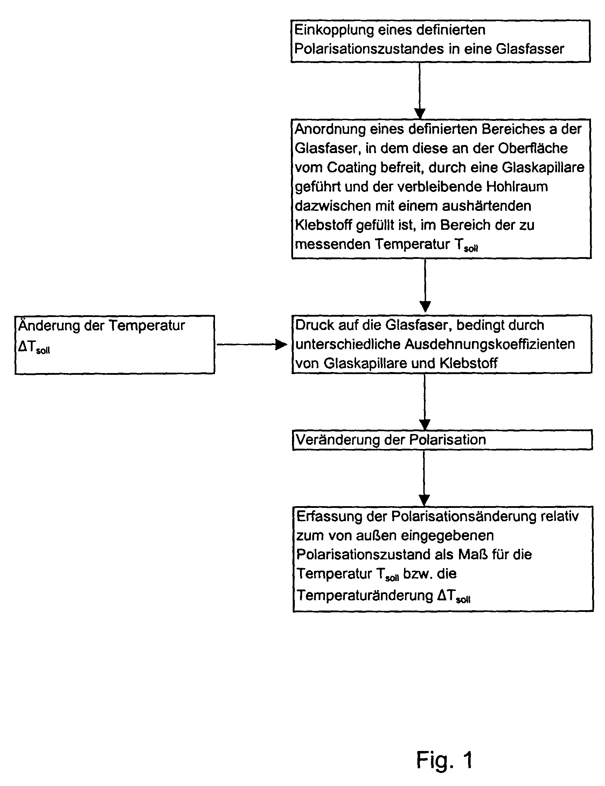

Aus dem in Figur 1 schematisch dargestellten Ablauf des erfindungsgemäßen Verfahrens zur faseroptischen Temperaturmessung ist zu entnehmen, daß zunächst einmal von außen, d. h. außerhalb des Bereiches des zu überwachenden Betriebsmittels o. ä., ein definierter Polarisationszustand eingekoppelt wird, indem auf an sich bekannte Weise ein Laser mit einem nachfolgenden, einstellbaren Polarisator zusammenwirkt. Nachfolgend wird eine Glasfaser in das zu überwachende Betriebsmittel o. ä. ein- und am Bereich, in dem die Temperatur erfaßt werden soll, vorbeigeführt. Dabei wird in diesem Bereich, in dem die Temperatur erfaßt werden soll, der Außenmantel der Glasfaser, etwa auf einer Länge im mm- oder cm-Bereich, vom Coating befreit, durch eine Glaskapillare geführt, die nicht oder nur unwesentlich länger ist als der freigelegte Bereich der Glasfaser, und der verbleibende Hohlraum wird mit einem Klebstoff aufgefüllt. Das andere freie Ende der Glasfaser wird wieder nach außen geführt und dort an einem Polarimeter angeschlossen. Durch die unterschiedlichen thermischen Ausdehnungskoeffizienten von Glas einerseits und Kleber andererseits kommt es bei Temperaturveränderungen im von der Glaskapillare umhüllten Bereich der Glasfaser zu einem mechanischen Druck, derart, daß die Polarisation in der Glasfaser beeinflußt wird. Diese Polarisationsänderung, die ein Maß für die punktuelle gemessene Temperatur im Betriebsmittel darstellt, wird am Faserende durch das Polarimeter detektiert.

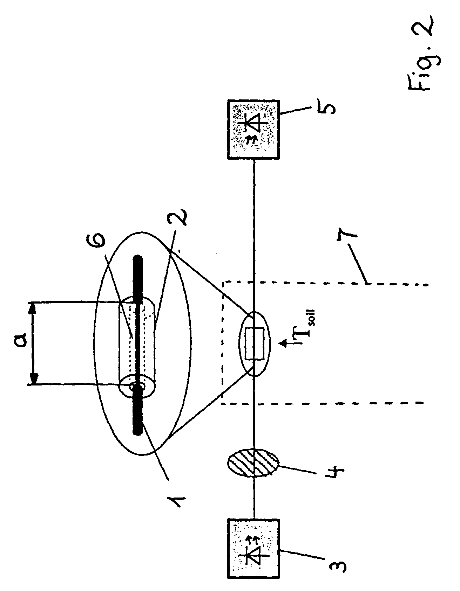

Figur 2 zeigt einen erfindungsgemäßen faseroptischen Temperatursensor, der auf einfachste Weise als Low-Cost-Sensor ausgebildet ist. Es ist zu sehen, daß die Glasfaser 1 in einem gewissen Längenbereich a im Bereich der zu erfassenden Umgebungstemperatur Tₛₒₗₗ in einer energietechnischen Anlage, z. B. einem Transformator 7, vom sie ansonsten umgebenden Coating befreit ist und durch eine Glaskapillare 2 hindurchgeführt ist. Der Transformator 7, in dessen Inneren an einer charakteristischen Stelle die Temperatur Tₛₒₗₗ erfaßt und überwacht werden soll, ist nur als Strichlinie angedeutet. Die Glaskapillare 2 weist einen Innendurchmesser auf, der größer ist als der Außendurchmesser der Glasfaser 1. Am Anfang der Glasfaser 1 sind auf bekannte Weise ein Laser 3 und ein Polarisator 4 vorgesehen, am freien Ende der Glasfaser ist ein Polarimeter 5 angeordnet. Der Hohlraum zwischen der Glasfaser 1 und der Glaskapillare 2 ist mit einem Klebstoff 6 ausgefüllt. Als Glasfaser 1 ist auf besonders vorteilhafte Weise eine LoBi-Faser verwendbar, die besonders empfindlich auf mechanischen Druck reagiert. Als Kleber 6 ist beispielsweise ein Epoxidharzkleber der Marke Delo mit einem thermischen Ausdehnungskoeffizienten von 90 * 10⁻⁶ K⁻¹ geeignet. Als Glas für die Glaskapillare 2 ist Quarzglas mit einem thermischen Ausdehnungskoeffizienten von 0,5 * 10⁻⁶ K⁻¹ geeignet. Ändert sich die Umgebungstemperatur Tₛₒₗₗ am Sensorbereich, so kommt es, bedingt durch die unterschiedlichen thermischen Ausdehnungskoeffizienten, zu einem mechanischen Druck, so daß die Polarisation in der Glasfaser 1 beeinflußt wird. Diese Änderung als Maß für eine Temperaturänderung ΔTₛₒₗₗ ist am Polarimeter 5 erfaßbar.

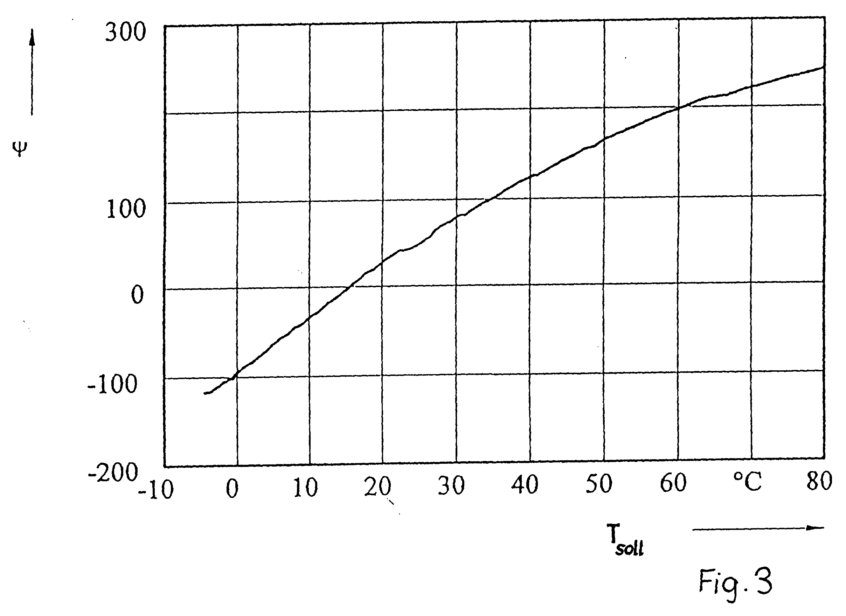

In Figur 3 ist der Einfluß der linearen Doppelbrechung gemäß der Erfindung, charakterisiert durch den Elliptizitätswinkel ψ, dargestellt. Über einen weiten Temperaturbereich der Umgebungstemperatur Tₛₒₗₗ ändert sich dieser Parameter stetig. Signaltechnisch läßt sich diese Änderung in der Elliptizität der Lichtwelle, wie erläutert, mit dem Polarimeter 5 detektieren. Der gezeigte Zusammenhang ergibt sich beispielhaft bei der Verwendung des kommerziell erhältlichen Klebstoffes Delo-Katiobond 4594 als Klebstoff 6. Es ist auch möglich, bei einem sogenannten 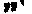 All-fiber-Aufbau" mit geschickter Orientierung eines Analysators diese Elliptizität auf eine Intensitätsmessung zurückzuführen. Eine dabei möglicherweise auftretende Mehrdeutigkeit im Signal, die bei starkem Doppelbrechungseinfluß durch den cosinus-förmigen Zusammenhang zwischen Polarisationswinkel und Intensität am Analysator zustandekommen kann, läßt sich über eine Anpassung der Einwirkstrecke, d. h. des Längenbereiches a des entcoateten Bereichs der Faser 1, verhindern.

Insgesamt gestatten es das erfindungsgemäße Verfahren und der erfindungsgemäße Sensor, mit geringstem Kostenaufwand einen punktuellen, potentialfreien Temperatursensor für die eingangs genannten Anwendungsbereiche vorzusehen.

## Patentansprüche

1. Verfahren zur faseroptischen Temperaturmessung mit einer polarimetrisch wirkenden Glasfaser,
**dadurch gekennzeichnet,**
daß in die Glasfaser (1) von außen an einem freien Ende ein definierter Polarisationszustand eingekoppelt wird,
daß ein definierter Längenbereich (a) der Glasfaser (1), in dem diese an der Oberfläche vom Coating befreit, durch eine Glaskapillare (2) geführt und der verbleibende Hohlraum dazwischen mit einem aushärtenden Klebstoff (6) gefüllt ist, im Bereich der zu messenden umgebenden Temperatur (Tₛₒₗₗ) angeordnet wird
und daß eine Polarisationsänderung relativ zum von außen eingegebenen definierten Polarisationszustand als Maß für die Temperatur (Tₛₒₗₗ) bzw. die Temperaturänderung (ΔTₛₒₗₗ) im Längenbereich (a) der Glasfaser (1) am anderen freien Ende der Glasfaser (1) erfaßt wird, vorzugsweise durch ein Polarimeter (5).

2. Faseroptischer Temperatursensor mit einer polarimetrisch wirkenden Glasfaser, deren eines Ende mit Mitteln zur definierten Erzeugung eines Polarisationszustandes, insbesondere einem Laser und einem nachgeschalteten Polarisator, in Verbindung steht,
**dadurch gekennzeichnet,**
daß die Glasfaser (1) in einem gewissen Längenbereich (a) im Bereich der zu erfassenden Umgebungstemperatur (Tₛₒₗₗ) vom sie ansonsten vollständig umgebenden Coating befreit und durch eine Glaskapillare (2), deren Länge annähernd dem Längenbereich (a) entspricht, hindurchgeführt ist,
daß die Glaskapillare (2) einen Innendurchmesser aufweist, der größer ist als der Außendurchmesser der Glasfaser (1),
daß der radiale Hohlraum zwischen der Oberfläche der Glasfaser (1) und der Glaskapillare (2) mit einem Klebstoff (6), der ausgehärtet ist, ausgefüllt ist, derart, daß eine kraftschlüssige Verbindung im Längenbereich (a) zwischen Glasfaser (1) und Glaskapillare (2) vorhanden ist,
und daß am anderen freien Ende der Glasfaser (1) Mittel zur Erfassung von Polaritätsänderungen, insbesondere ein Polarimeter (5) angeordnet sind bzw. ist, derart, daß eine Polaritätsänderung als Maß für eine Temperatur (Tₛₒₗₗ) bzw. eine Temperaturänderung (ΔTₛₒₗₗ) erfaßbar ist.

3. Faseroptischer Temperatursensor nach Patentanspruch 2,
**dadurch gekennzeichnet,**
daß als Glasfaser (1) eine besonders empfindlich auf mechanischen Druck reagierende LoBiFaser verwendet ist.

4. Faseroptischer Temperatursensor nach Patentanspruch 2 oder 3,
**dadurch gekennzeichnet,**
daß als Klebstoff (6) ein Epoxidharzklebstoff, beispielsweise ein Delo-Kleber, mit einem thermischen Ausdehnungskoeffizienten von 90 * 10⁻⁶ K⁻¹, verwendet ist.

5. Faseroptischer Temperatursensor nach einem der Patentansprüche 2 bis 4,
**dadurch gekennzeichnet,**
daß die Glaskapillare (2) aus Quarzglas mit einem thermischen Ausdehnungskoeffizienten von 0,5 * 10⁻⁶ K⁻¹ besteht.
